(19) Europäisches Patentamt

European Patent Office

Office européen des brevets

(11) Veröffentlichungsnummer: **0 280 016**
**A2**

(12) **EUROPÄISCHE PATENTANMELDUNG**

(21) Anmeldenummer: 88100350.3

(22) Anmeldetag: 13.01.88

(51) Int. Cl.⁴: **F23C 11/02** , F27B 15/10 ,
B01J 8/44

(30) Priorität: 27.02.87 DE 3706371

(43) Veröffentlichungstag der Anmeldung:
**31.08.88 Patentblatt 88/35**

(84) Benannte Vertragsstaaten:
**AT BE CH DE ES FR GB GR IT LI LU NL SE**

(71) Anmelder: **L. & C. Steinmüller GmbH**
**Postfach 10 08 55/10 08 65 Fabrikstrasse 1**
**D-5270 Gummersbach 1(DE)**

(72) Erfinder: **Heinze, Peter**
**Scheidter Strasse 17**
**D-5276 Wiehl 2(DE)**
Erfinder: **Tummers, Peter**
**Am Stockweg 5**
**D-5270 Gummersbach 21(DE)**

(74) Vertreter: **Carstens, Wilhelm, Dipl.-Phys.**
**L. & C. Steinmüller GmbH Patentabteilung**
**Postfach 10 08 55/10 08 65**
**D-5270 Gummersbach 1(DE)**

(54) Vorrichtung zum Eindüsen eines gasförmigen Mediums für einen Wirbelschichtprozess.

㉝
1. Vorrichtung zum Einbringen eines gasförmigen Mediums in einer Ebene eines Wirbelschichtraumes, insbesondere eine Wirbelschichtfeuerraumes, mit mindestens einem Verteilerrohr, mit daran angeschlossenen Düsenrohren und mit Austrittsöffnungen in der Düsenrohrwand.

2.1 Um das gasförmige Medium in einer für den Wirbelschichtprozeß erforderlichen Verteilung einzubringen, wird in einem Wirbelschichtraum eine Vielzahl von Verteilerrohren angeordnet und zur Gasversorgung durch die Raumwand geführt, was hinsichtlich der Fertigung und Montage sowie der Reinigung, Wartung und Instandhaltung einen erheblichen Aufwand verursacht. Die neue Vorrichtung soll bei einer gezielten Gasverteilung die Zahl der Wanddurchtritte und den Aufwand mindern.

2.2 Die Düsenrohre nehmen an dem Verteilerrohr jeweils eine Lage ein, die innerhalb eines geraden Kegels oder auf dem Kegel liegt, dessen Kegelachse rechtwinklig auf das Verteilerrohr gerichtet in einer horizontalen Ebene liegt. Vorzugsweise sind die Düsenrohre einander gegenüberliegend angeordnet.

2.3 Hauptanwendungsgebiet ist der Einsatz der Vorrichtung zum Einbringen von Verbrennungsluft zur primären und/oder sekundären Luftversorgung einer Wirbelschichtfeuerung.

Fig. 1

# Vorrichtung zum Eindüsen eines gasförmigen Mediums für einen Wirbelschichtprozeß

Die Erfindung betrifft eine Vorrichtung zum Einbringen eines gasförmigen Mediums, insbesondere Luft, in einer Ebene eines Wirbelschichtraumes, insbesondere eines Wirbelschischtraumes, mit mindestens einem Verteilerrohr und mit Düsenrohren, die in einem Winkel, insbesondere in einem Rechten Winkel, an das Verteilerrohr angeschlossen sind und Austrittsöffnungen in der Düsenrohrwand aufweisen.

Eine derartige Vorrichtung ist aus der DE-OS 33 43 480 bekannt. Diese Vorrichtung besteht aus in einem Wirbelschichtraum angeordneten Verteilerrohren, die mit ihrem einen Ende durch eine Wand des Wirbelschichtraumes geführt und mit einer außerhalb des Raums befindlichen Luftversorgung verbunden sind. Mit ihrem anderen Ende liegen die Verteilerrohre meist zum Ausgleich von Wärmedehnungen in einer zum Wanddurchtritt gegenüberliegenden Wand des Wirbelschichtraumes gleitend auf. An jedem Verteilerrohr sind vertikal Düsenrohre rechtwinklig angeschlossen, die in der Rohrwand in einer Ebene des Wirbelschichtraumes Austrittsöffnungen zum Einbringen von Luft zum Fluidisieren und Verbrennen von Wirbelschichtmaterial besitzen.

Die vielen Wanddurchführungen der Verteilerrohre im Wirbelschichtraum verteuern die Fertigung und Montage der Vorrichtung. Eine Reinigung, Wartung oder Instandhaltung der meist thermisch und/oder abrasiv hochbelasteten Vorrichtung läßt sich nur mit relativ hohem Aufwand durchführen. So ist es beispielsweise kaum möglich, das aus Verteilerrohren und Düsenrohren bestehende Rohrsystem in einfacher Weise, d. h. ohne Teildemontage von Vorrichtung und Wirbelschichtraum, innenseitig von während Betriebsstillsetzungen eingedrungenen Staubpartikeln zu reinigen.

Darüber hinaus ist die Einsatzmöglichkeit der bekannten Vorrichtung aufgrund ihrer Bauweise auf die Anwendung zum gleichzeitigen Einbringen von Verbrennungs-oder Fluidisierungsluft sowie Kühlluft beschränkt.

Der Erfindung liegt die Aufgabe zugrunde, eine Vorrichtung zum Einbringen eines gasförmigen Mediums in einen Wirbelschichtraum zu entwickeln, durch die die Anzahl der Wanddurchdringungen verringert, ein Ein-und Ausbau sowie ihre Reinigung, Wartung und Instandhaltung erleichtert und ein unbeschränkter Einsatz ermöglicht wird.

Die Aufgabe wird dadurch gelöst, daß die Düsenrohre an dem Verteilerrohr jeweils eine Lage einnehmen, die innerhalb eines geraden · Kegels oder auf dem Kegel liegt, dessen Kegelachse rechtwinklig auf das Verteilerrohr gerichtet ist und in einer horizontalen Ebene liegt.

Die Lage eines Düsenrohres an dem Verteilerrohr ist demnach von einem gedachten geraden Kegel begrenzt, wobei die Kegelspitze stets in der Düsenrohrachse und bei der Rohranschlußstelle liegt. Die Richtung des Düsenrohres kann bezogen auf die horizontale Ebene beispielsweise schräg nach oben oder schräg nach unten sein. Beispielsweise kann aber auch ein in der horizontalen Ebene liegendes Düsenrohr achsmäßig unter einem bestimmten Winkel an dem Verteilerrohr angeschlossen sein, wobei in einem bestimmten Sonderfall dieser Winktel rechtwinklig ist. In jeder nur denkbaren Lage des Düsenrohres ist seine Länge dabei durch den Kegel selbst nicht eingeschränkt.

Die Verteilung eines gasförmigen Mediums über einer Ebene bzw. einer Schicht eines Wirbelschichtraumes wird bei der bekannten Vorrichtung von der Dichte der im Raum befindlichen Verteilerrohre beeinflußt, bei der erfindungsgemäßen Vorrichtung dagegen von der Lage und der Länge der Düsenrohre an dem Verteilerrohr. Als gasförmiges Medium in Form eines einzigen Gases, eines Dampfes oder einer Mischung derselben kann für einen Wirbelschichtprozeß außer Luft beispielsweise Erdgas, Wasserdampf, Rauchgas, Ammoniak, Prozeßgase, Gas mit oder ohne Additivstoffe usw. zum Einsatz gelangen. Durch die erfindungsgemäße Lage der Düsenrohre kann bei entsprechender Dimensionierung und Anordnung der Düsenrohre über die Einbringebene bzw. -schicht in Anpassung an die räumlichen Gegebenheiten die Anzahl der Verteilerrohre vermindert werden.

Besonders zweckmäßig ist es, wenn die Düsenrohre einander gegenüberliegend angeordnet sind.

Da aus einem Verteilerrohr zu einander gegenüberliegenden Seiten des Verteilerrohres befindliche Düsenrohre mit einem gasförmigen Medium versorgt werden, ist in einem Vergleich zur bekannten Vorrichtung hierbei jedes zweite Verteilerrohr entbehrlich. Auf diese Weise läßt sich die Anzahl der Rohrdurchführungen durch eine Wand des Wirbelschichtraumes noch weiter vermindern.

Die Einbringung eines gasförmigen Mediums in einer Ebene eines Wirbelschichtraumes sollte hinsichtlich seiner Verteilung über die Ebene gezielt vorgenommen werden, damit z. B. entsprechend den Bedingungen in einem Wirbelschichtprozeß das Gas an jeder gewünschten Stelle des Wirbelschichtraumes in der erforderlichen Menge bereitgestellt wird.

In Anpassung an die räumliche Ausdehnung einer Wirbelschicht und zur Erreichung einer gezielten Verteilung von Gas ist es zweckmäßig, wenn an einem horizontal geführten Verteilerrohr mehrere Düsenrohre in vorgegebenen Abständen angeschlossen sind.

In Abhängigkeit von der Größe einer mit einem gasförmigen Medium zu beschickenden horizontalen Ebene des Wirbelschichtraumes besteht im Extremfall die Möglichkeit, nur noch ein Verteilerrohr mit einem Wanddurchtritt einzusetzen. Beim Einsatz mehrerer horizontaler Verteilerrohre bietet sich beispielsweise die Möglichkeit an, innerhalb des Wirbelschichtraumes diese zu einem einzigen Rohrsystem zusammenzuschließen, das dann nur über mindestens ein durch eine Wand des Wirbelschichtraumes geführtes Zuführrohr mit einer außerhalb des Raums befindlichen Gasversorgung verbunden ist.

Eine gezielte Gasverteilung kann zweckmäßigerweise auch erreicht werden, wenn bei einer Vielzahl von vertikal geführten Verteilerrohren mindestens zwei Düsenrohre in vorgegebener Verteilung vorgesehen sind.

Die gezielte Gasverteilung kann danach durch eine Düsenrohranordnung herbeigeführt werden, die gleichwertig zu jener mit einer horizontalen Verteilerrohrführung ist.

Entsprechend diesen verschiedenen baulichen Gegebenheiten kann die Vorrichtung an jeder geeigneten Stelle einer stationären oder zirkulierenden Wirbelschicht angeordnet werden. Sie eignet sich auch für einen mehrfachen Einsatz in einem Wirbelschichtraum, insbesondere dann, wenn das gasförmige Medium in mehreren Stufen, beispielsweise als Primär-und Sekundärgas in einen Wirbelschichtraum eingebracht wird.

Im Hinblick auf eine gezielte Gasverteilung ist es ferner zweckmäßig, wenn die Düsenrohre in ihrer Rohrwand in vorgegebenen Abständen und in mindestens einer Reihe Austrittsöffnungen aufweisen.

Durch eine entsprechende Anordnung von Austrittsöffnungen in Form von beispielsweise reinen Rohrwandbohrungen oder eingesetzten Düsenelementen an jedem Düsenrohr in Verbindung mit einer vorgegebenen Anordnung der Düsenrohre im Wirbelschichtraum können die Austrittsöffnungen über die Einbringebene so verteilt angeordnet werden, daß stets eine gezielte Verteilung des gasförmigen Mediums über die Einbringebene sichergestellt ist.

Hierzu kann es ferner zweckmäßig sein, wenn das Verteilerrohr in seiner Rohrwand in vorgegebenen Abständen und in mindestens einer Reihe Austrittsöffnungen aufweist.

Durch die zusätzliche Ausgestaltung eines Verteilerrohres mit Austrittsöffnungen läßt sich im Bedarfsfall die Verteilung des eingebrachten Gases weiter verbessern. Dabei bleibt meist der jeweilige Rohrquerschnitt von einem Verteilerrohr und/oder einem Düsenrohr entlang der Rohrachse gleich groß. In Abhängigkeit von der Zahl der Austrittsöffnungen kann sich ggf. der Rohrquerschnitt entlang der Rohrachse aber auch stufenweise ändern.

Bei Betriebsunterbrechungen besteht die Möglichkeit, daß Staubpartikel durch die Austrittsöffnung in das Innere von Düsenrohren bzw. des gesamten Rohrsystems gelangen. Um dem entgegenzuwirken, ist es zweckmäßig, wenn die in der jeweiligen Rohrwand befindlichen Austrittsöffnungen in Abhängigkeit von dem Verhältnis aus der Rohrwandstärke und dem Durchmesser der Austrittsöffnung jeweils in einer von der Austrittsöffnung bestimmten Rohrquerschnittsebene in einem Winkelbereich von 0-180° unterhalb einer horizontalen, in der Rohrquerschnittsebene und in deren Mittelpunkt liegenden Geraden gerichtet sind.

Durch diese Ausrichtung wird sowohl ein Schwerkraft bedingtes Eindringen von Staubpartikeln in das Rohrinnere erschwert, als auch ein Austragen von eingedrungenen Staubpartikeln des ausströmenden Gases erleichtert. Der Einfluß des Rohrwandstärke/Austrittsöffnungdurchmesser-Verhältnisses ist dabei derart, daß durch eine große Wandstärke und einen kleinen Austrittsöffnungdurchmesser für die Richtung der Austrittsöffnung ein relativ kleiner Winkel unterhalb der horizontalen Ebene und umgekehrt erforderlich ist.

Diesbezüglich ist es auch zweckmäßig, wenn an dem freien Endes eines Verteilerrohres und/oder eines Düsenrohres jeweils in der Rohrabschlußwand mindestens eine Austrittsöffnung vorgesehen ist. Dies ermöglicht in vorteilhafter Weise auch das Austragen von eingedrungenen Staubpartikeln in Richtung der Düsenrohrachse.

Um Reinigungsarbeiten leichter durchführen zu können, ist es zweckmäßig, wenn an dem freien Ende eines jeden Düsenrohres und/oder eines jeden Verteilerrohres ein entfernbarer Kappenverschluß vorgesehen ist.

Die Entfernbarkeit der Kappenverschlüsse ermöglicht in vorteilhafter Weise, daß die Rohrdüsen und evtl. auch die Verteilerrohre ohne Demontage der gesamten Vorrichtung bei Betriebsstillstand im Wirbelschichtraum rohrinnenseitig gereinigt werden können.

Für den Fall größerer Wartungs-und Instandhaltungsarbeiten ist ferner zweckmäßig, wenn die Düsenrohre an das Verteilerrohr lösbar befestigt sind.

Eine Lösbarkeit der Düsenrohre gestattet es, entweder eine Demontage der gesamten Vorrichtung aus dem Wirbelschichtraum durchzuführen oder die Vorrichtung in kleinere leichter handhabbare Bauteile zu zerlegen oder in einfacher Weise einzelne verschlissene Düsenrohre gegen neue auszuwechseln.

Wie zuvor erwähnt, kann die Vorrichtung sowohl für eine primäre als auch sekundäre Gasversorgung eingesetzt werden. Für den Fall, daß eine sekundäre Gasversorgung in Verbindung mit einer primären Gasversorgung in einem Wirbelschichtraum zu installieren ist, ist es ferner zweckmäßig, wenn die Düsenrohre in mindestens einem vorgegebenen Abstand über einem Düsenboden einer primären Gasversorgung angeordnet sind.

Danach kann über die Düsenrohre Sekundärgas in jenem Abstand über einem primären Prozeß einer Wirbelschicht in das aus dem Prozeß entweichende Gas-Feststoffteilchen-Gemisch eingebracht werden, der sich im Hinblick auf die Gestalt des Wirbelschichtraumes und der daraus resultierenden Gasführung optimal anbietet.

Bei einem Wirbelschichtraum, dessen Strömungsquerschnitt sich in einer bestimmten Raumhöhe von unten nach oben sprunghaft erweitert, ist es zweckmäßig, wenn die Düsenrohre in einer Ebene zu Beginn einer sprunghaften Querschnittserweiterung des Wirbelschichtraumes angeordnet sind.

Eine derartige Anordnung ist insofern von Vorteil, da ein Einbringen eines gasförmigen Mediums an einer Stelle des Wirbelschichtraumes erfolgt, in der durch die Raumgeometrie hervorgerufene Turbelenzen in der Gasströmung vorliegen.

Für den besonderen Anwendungsfall, daß einem primären Wirbelschichtprozeß eine ein-oder mehrstufige Nachbehandlung nachgeschaltet ist und aufgrund der räumlichen Gegebenheiten vertikale Verteilerrohre zum Einsatz kommen, ist es ferner zweckmäßig, wenn mindestens ein vertikales Verteilerrohr mit einer unter dem Wirbelschichtraumboden befindlichen Gasversorgung verbunden ist.

Verteilerrohr und Düsenrohre der erfindungsgemäßen Vorrichtung sind aufgrund der in einem Wirbelschichtraum vorherrschenden thermischen und stofflichen Bedingungen werkstoffmäßig starken Belastungen unterworfen. Um die Belastungen weitestgehend zu vermindern, ist es zweckmäßig, wenn das Verteilerrohr und die Düsenrohre mit hitze-und/oder abriebfestem Material ummantelt sind.

Eine Ummantelung der meist thermisch eingeschränkt belastbaren Verteiler-und Düsenrohre aus metallischem, insbesondere eisenhaltigem Werkstoff mit einem hitze-und/oder abriebfestem Material gestattet es, die Vorrichtung an jenen Stellen eines Wirbelschichtraumes einzusetzen, an denen sehr hohe Temperaturen vorliegen und/oder die Vorrichtung einem hohen Verschleiß durch Abrieb oder Erosion ausgesetzt ist.

Für bestimmte Wirbelschichtprozesse kann es zweckmäßig sein, wenn das Verteilerrohr und die Düsenrohre mit einer Katalysator-Ummantelung versehen sind. Auf diese Weise können mittels einer einzigen Vorrichtung mehrere verfahrenstechnische Maßnahmen auf wirtschaftliche Weise kombiniert werden.

Bei einem temperaturmäßig hoch belasteten Wirbelschichtraum, insbesondere bei einer Wirbelschichtfeuerung, kann es auch zweckmäßig sein, wenn das Verteilerrohr und die Düsenrohre mit einer Rohrkühleinrichtung versehen sind. Dabei kann für die Rohrkühleinrichtung beispielsweise in Form einer Rohrmantelkühlung als Kühlmedium entweder das einzubringende kalte, gasförmige Medium eingesetzt werden oder/und es wird ein flüssiges Kühlmedium verwendet, das z. B. einem Wirbelschichtraum-Kühlkreislauf entnommen wird, wobei das flüssige Kühlmedium entweder vom gasförmigen Medium getrennt geführt wird oder ggf. auch mit dem gasförmigen Medium in den Wirbelschichtprozeß eingebracht wird.

Die in einem Wirbelschichtraum angeordnete Vorrichtung bewirkt bereits eine Störung des an ihm vorbei fließenden Gasstromes, wodurch Wirbelstraßen gebildet werden, die die Zumischung eines gasförmigen Mediums in diesen Gasstrom begünstigt. Um diese Gasvermischung noch weiter zu verstärken, ist es zweckmäßig, wenn das Verteilerrohr und/oder die Düsenrohre mit Elementen zur Beeinflussung der Gasströmung versehen sind.

Die an den bereffenden Rohren angebrachten Elemente, beispielsweise Bolzen, Stifte, gerade, gebogene oder gewinkelte Blechteile, stören die Gasströmung derart, daß auf der Abstromseite der Elemente Wirbelstraßen bestimmter Ausbildung entstehen, die nochmals den Mischvorgang intensivieren.

Ferner ist es auch zweckmäßig, wenn das Verteilerrohr gleichzeitig ein Versteifungselement mindestens einer den Wirbelschichtraum begrenzenden Wand ist.

Das Verteilerrohr kann bei entsprechender Rohrdimensionierung beispielsweise zugleich als Träger bzw. als Tragelement für den Boden des Wirbelschichtraumes eingesetzt werden. Es kann aber auch eine abstützende und/oder versteifende Funktion für mindestens eine Seitenwand des Wirbelschichtraumes haben.

In Verbindung mit einer Verminderung der Zahl an Rohrdurchführungen durch eine Wand des Wirbelschichtraumes ist es zweckmäßig, wenn der Winkel an der Kegelspitze ein Rechter Winkel ist.

Durch die Begrenzung des Winkels an der Kegelspitze auf einen Rechten wird bewirkt, daß sich die Düsenrohre lagemäßig mehr in Richtung einer Horizontalen erstrecken, wodurch die Anzahl an Wanddurchführungen noch weiter reduziert werden kann.

Dabei ist es ferner zweckmäßig, wenn die Düsenrohre jeweils in der Kegelachse liegen.

Die Ausrichtung der Düsenrohre auf die horizontal geführte Kegelachse bildet die optimalste Lösung bei der Verringerung der Wanddurchführungen unter dem Einfluß der Lage der Düsenrohre in einem gedachten geraden Kegel.

Die Erfindung soll nun anhand der in den beigefügten Zeichnungen dargestellten Ausführungsbeispiele näher erläutert werden. Es zeigen

Fig. 1 eine erste Ausführungsform einer Vorrichtung mit einem einzigen horizontalen Verteilerrohr,

Fig. 2 einen Querschnitt eines Düsenrohres mit rundem Strömungsquerschnitt,

Fig. 3 einen Querschnitt eines Düsenrohres mit rechteckigem Strömungsquerschnitt,

Fig. 4 eine andere Ausführungsform einer Vorrichtung mit zwei horizontalen Verteilerrohren,

Fig. 5 eine Vorrichtung mit mehreren vertikalen Verteilerrohren,

Fig. 6 eine Vorrichtung analog Fig. 4, die in einem Wirbelschichtfeuerraum über einem Düsenboden zur primären Gasversorgung angeordnet ist,

Fig. 7 eine Vorrichtung analog Fig. 5, die über einem Düsenboden mit einer primären Gasversorgung verbunden ist,

Fig. 8 einen Wirbelschichtfeuerraum mit einer sprunghaften Querschnittserweiterung und zwei im Raum angeordneten Vorrichtungen,

Fig. 9 einen Querschnitt eines Rohres analog Fig. 2 mit einer Ummantelung,

Fig.10 einen Querschnitt eines Rohres analog Fig. 2 mit einer Rohrmantelkühlung,

Fig.11 ein Düsenrohr mit Bolzen oder Stiften zur Beeinflussung der Gasströmung und

Fig.12 ein vertikales Verteilerrohr mit einem Blechteil zur Beeinflussung der Gasströmung.

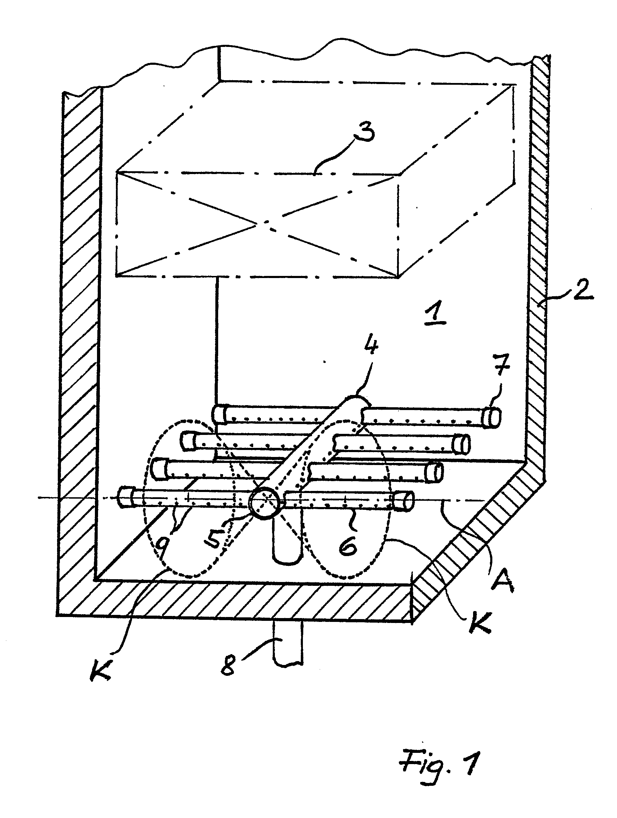

Gemäß Fig. 1 befindet sich innerhalb einer einen stationären Wirbelschichtfeuerraum (1) begrenzenden Wand (2) unterhalb eines in die Wirbelschicht eintauchenden Rohrbündelwärmetauschers (3) eine Vorrichtung (4) zum Einbringen von Fluidiserungs-und Verbrennungsluft, wobei der Wirbelschichtfeuerraum (1) eine rechteckige horizontale Querschnittsebene aufweist. Die Vorrichtung (4) besteht aus einem horizontal geführten Verteilerrohr (5), das sich parallel zu einer Wirbelschichtfeuerraumwand (2) nahezu über die gesamte Tiefe des Wirbelschichtfeuerraumes (1) erstreckt. An dem Verteilerrohr (5) sind Düsenrohre (6) angeschlossen, die lagemäßig innerhalb eines gedachten geraden Kegels (K) liegen können, dessen Kegelachse (A) rechtwinklig auf das Verteilerrohr (5) gerichtet ist und in einer horizontalen Ebene liegt. Die Düsenrohre (6) liegen bei der gezeigten Ausführungsform jeweils in der Kegelachse (A) und sind an dem Verteilerrohr (5) einander fluchtend gegenüberliegend angeschlossen, wobei die Düsenrohre nahezu die gesamte Breite des Wirbelschichtfeuerraumes (1) einnehmen. An dem freien Ende eines jeden Düsenrohres (6) befindet sich ein entfernbarer Kappenverschluß (7). Das aus dem Verteilerrohr (5)und den Düsenrohren (6) bestehende Rohrsystem ist über ein durch die Wand (2) des Wirbelschichtfeuerraumes (1) geführtes vertikales Zuführrohr (8) mit einer außerhalb des Wirbelschichtfeuerraumes befindlichen Luftversorgung verbunden, wobei in vorteilhafter Weise auf eine unter dem Wirbelschichtraum befindliche Luftversorgung in Form eines Luftkastens verzichtet werden kann. In Anpassung an die örtlichen Gegebenheiten besteht auch die Möglichkeit, anstelle des vertikalen Zuführrohres (8) das Verteilerrohr (5) horizontal durch die Wand (2) des Wirbelschichtfeuerraumes (1) nach außen zu führen. Sowohl am Verteilerrohr (5) als auch an den Düsenrohren (6) befinden sich in der jeweiligen Rohrwand in vorgegebenen Abständen und in mindestens einer Reihe Austrittsöffnungen (9), über die die aus der Luftversorgung über das Zuführrohr (8), das Vertreilerrohr (5) und die Düsenrohre (6) herangeführte Luft gezielt über die horizontale Querschnittsebene der Wirbelschichtfeuerung verteilt in die Wirbelschicht eingebracht wird.

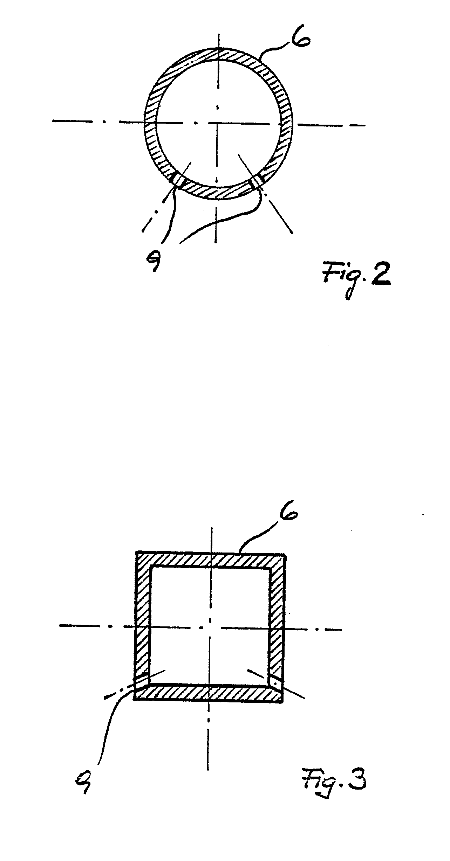

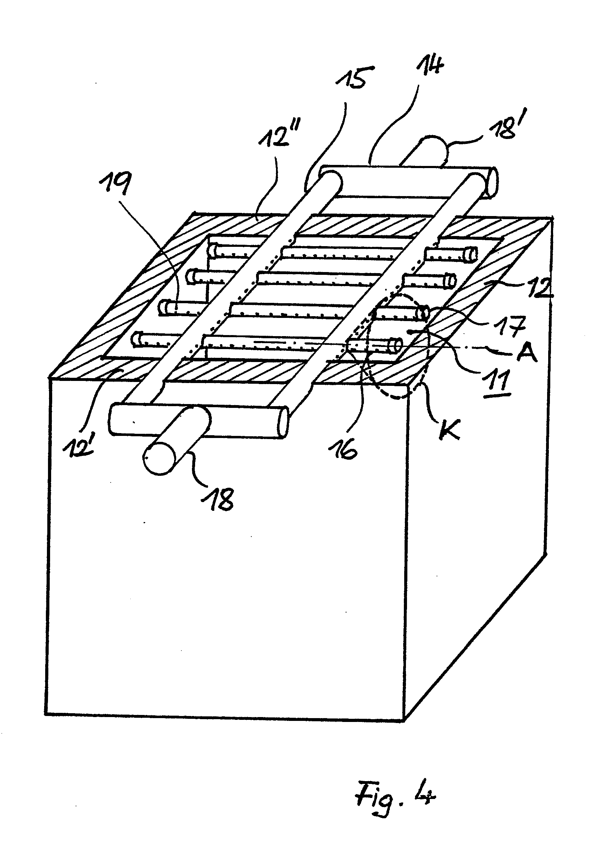

Die Austrittsöffnungen (9) z. B. sind gemäß den Fig. 2 und 3 in Düsenrohren (6) von rundem oder rechteckigem Strömungsquerschnitt in der jeweiligen Rohrwand schräg nach unten gerichtet, wobei die Richtung bezogen auf eine horizontale Ebene eines Wirbelschichtraumes einen Winkel von 0 bis 180° einnehmen kann.

Diese in Fig. 1 dargestellte Ausführungsform eignet sich insbesondere für eine primäre Luftversorgung einer Wirbelschichtfeuerung. Ein Einsatz der Ausführungsform, insbesondere bei horizontaler Wanddurchführung des Verteilerrohres bietet sich aber auch für eine sekundäre Luftversorgung an.

Fig. 4 zeigt eine in einer horizontalen Ebene eines Wirbelschichtraumes (11) angeordnete Vorrichtung (14), bei der zwei horizontale Verteilerrohre (15) parallel zueinander und zu einer Wand (12) des Wirbelschichtraumes (11) angeordnet sind und jeweils zwei Wände (12', 12") durchdringen. An beiden Seiten eines jeden Verteilerrohres sind Düsenrohre (16) jeweils innerhalb eines gedachten geraden Kegels (K) mit rechtwinklig auf das Verteilerrohr (15) gerichteter Kegelachse (A) in der Kegelachse (A) liegend einander fluchtend gegenüberliegend angeordnet, wobei die Düsenrohre sich im mittleren Bereich der Vorrichtung mit ihren freien Enden gegenüberstehen oder jeweils zu einem einzigen durchgehenden oder innenseitig getrennten Düsenrohr, wie dargestellt, vereinigt werden können. Die beiden Verteilerrohre (15) sind außerhalb des Wirbelschichtraumes (11) zu einem Rohrsystem zusammengeschlossen, das über zwei Zuführrohre (18, 18') mit einer Versorgung von sauerstoffhaltigem Gas verbunden ist. Es besteht auch die Möglichkeit, diese Ausführungsform innerhalb des Wirbelschichtraumes (11) anzuordnen, wobei die beiden Zuführrohre (18, 18') die Wand (12) des Wirbelschichtraumes (11) durchdringen. Ggf. kann dabei auch auf ein Zuführrohr (18) oder (18') verzichtet werden. An den Verteilerrohren (15) und den Düsenrohren (16) befinden sich Austrittsöffnungen (19) und entfernbare Verschlußkappen (17) entsprechend der in den Fig. 1, 2 oder 3 beschriebenen Anordnung.

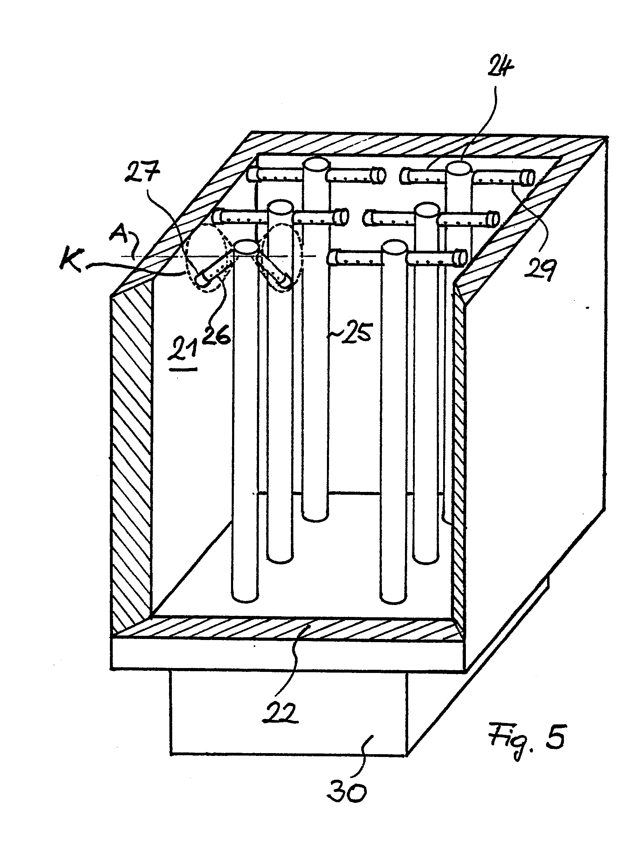

Fig. 5 zeigt eine Vorrichtung (24) mit einer Vielzahl von Verteilerrohren (25), die in einem Wirbelschichtraum (21) vertikal über einem Boden (22) von einer Versorgungseinrichtung (30) für ein gasförmiges Medium getrennt angeordnet sind. An jedem oberen Ende eines jeden Verteilerrohres (25) sind zwei Düsenrohre (26) einander gegenüber liegend angeordnet, wobei jedes Düsenrohr (26) sich lagemäßig innerhalb eines gedachten geraden Kegels (K) befindet, dessen Kegelachse (A) horizontal ist. Dabei nehmen die Düsenrohre (26) an dem Verteilerrohr (25), das in Fig.5 als Anschauungsbeispiel links vorne liegt, eine Lage ein, die gegenüber der horizontalen Kegelachse (A) ausgehend vom Verteilerrohr (25) jeweils schräg nach unten gerichtet ist. Bei den übrigen fünf vertikalen Verteilerrohren (25) sind die Düsenrohre (26) als in der jeweiligen Kegelachse (A) liegend dargestellt. Verschiedenste Kombinationen sind möglich.

Entsprechend der Anzahl der vertikalen Verteilerrohre (25) sind die Düsenrohrpaare (26) in der horizontalen Ebene derart verteilt angeordnet, daß stets eine gezielte Gasversorgung für den Wirbelschichtprozeß sichergestellt ist. In dem dargestellten Ausführungsfall sind die Rohrachsen der Düsenrohre (26) in der horizontalen Ebene parallel zueinander und zu einer Wand (22) des Wirbelschichtraumes (21) ausgerichtet. An den Düsenrohrpaaren (26) befinden sich entfernbare Verschlußkappen (27) und Austrittsöffnungen (29) entsprechend der in den Fig. 1 und 4 beschriebenen Art und Weise.

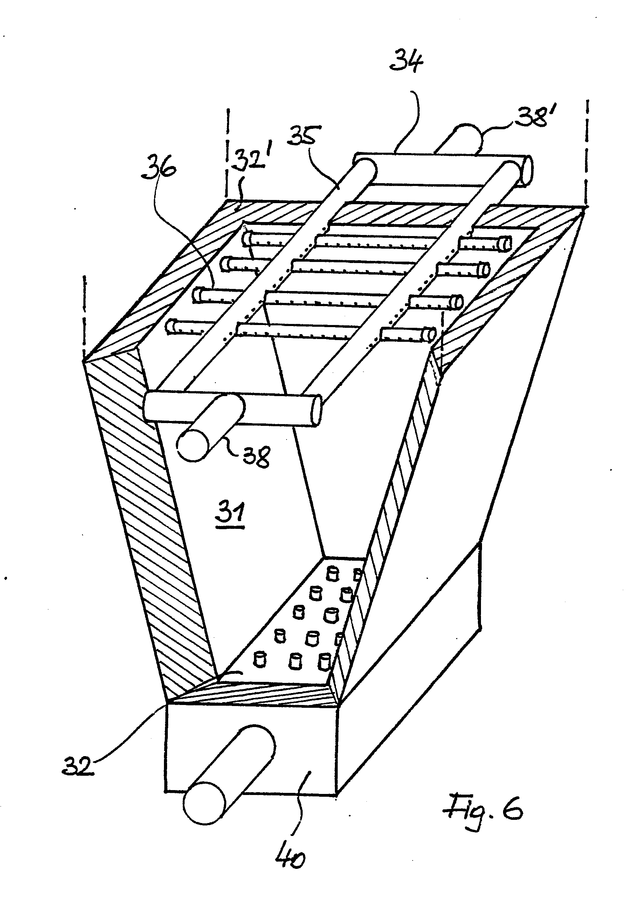

Fig. 6 zeigt einen Wirbelschichtfeuerraum (31), dessen Strömungsquerschnitt von unten nach oben konstant größer wird und ab einem bestimmten Vertikalabstand vom Feuerraumboden (32) gleichbleibt. Unter dem Feuerraumboden (32), der als Düsenboden ausgestaltet ist, befindet sich eine Einrichtung (40) zur primären Luftversorgung der Wirbelschicht über dem Düsenboden (32). In einem vorgegebenen Abstand über dem Düsenboden (32) ist in einer horizontalen Ebene eine Vorrichtung (34) analog zu jener in Fig. 4 dargestellten mit zwei parallelen Verteilerrohren (35), mit einander gegenüberliegenden Düsenrohren (36) und mit zwei außerhalb des Feuerraumes befindlichen und mit einer Luftversorgung verbundenen Zuführrohren (38, 38') angeordnet, über die Sekundärluft in das aus der primären Wirbelschichtfeuerungszone kommende und noch brennbares Wirbelschichtmaterial enthaltende Rauchgas eingetragen wird.

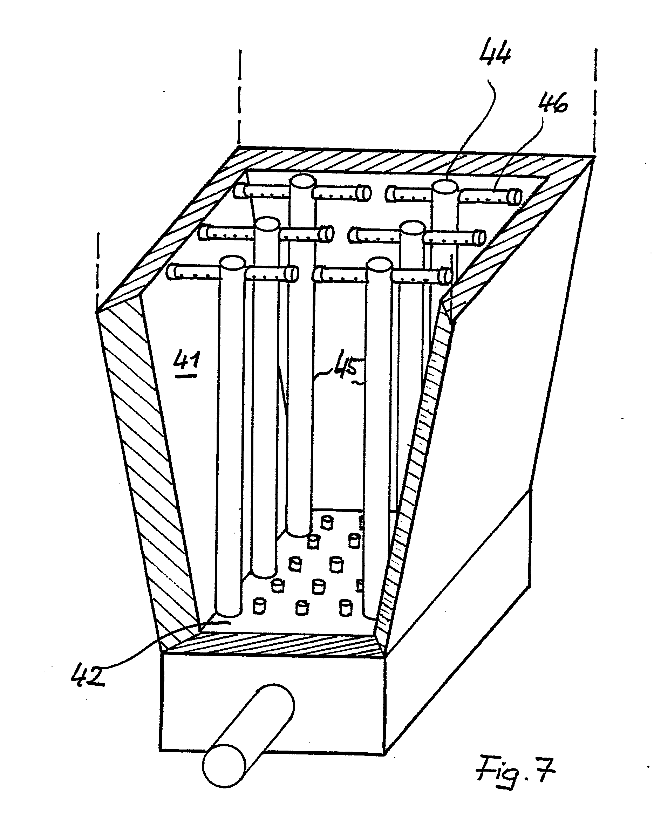

Fig. 7 zeigt einen zu Fig. 6 alternativen Anwendungsfall, wobei in einem Wirbelschichtfeuerraum (41), der in der Gestaltung ähnlich dem in Fig. 6 dargestellten ist, eine Vorrichtung (44) analog zu jener in Fig. 5 dargestellten angeordnet ist. Die Düsenrohre (46) dieser Vorrichtung (44) liegen in einer horizontalen Ebene in einem vorgegebenen Abstand über einem als Düsenboden ausgestalteten Feuerraumboden (42) in gleichmäßiger Verteilung und sind über vertikale Verteilerrohre (45) mit einer unter dem Düsenboden (42) befindlichen Luftversorgung verbunden. Wie bei der in Fig. 6 dargestellten Ausführungsform wird über den Düsenboden (32; 42) aus der darunterliegenden Luftversorgung Primärluft und über die Düsenrohre (36; 46) Sekundärluft in den Wirbelschichtfeuerraum (31; 41) eingebracht.

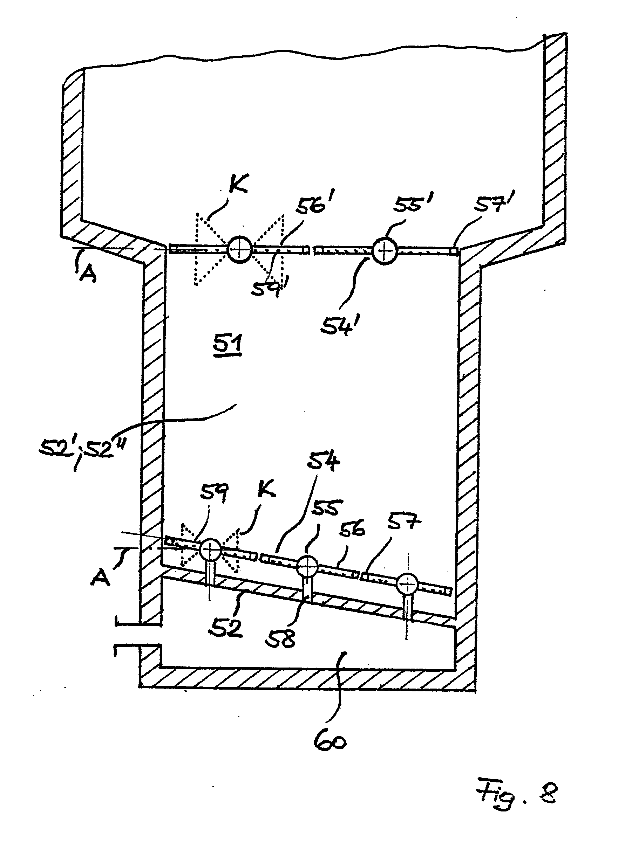

Gemäß Fig. 8 befinden sich in einem Wirbelschichtfeuerraum (51), dessen Strömungsquerschnitt von unten nach oben zunächst gleich bleibt, sich ab einem bestimmten Vertikalabstand vom Feuerraumboden mindestens einmal sprunghaft erweitert und anschließend wieder gleich bleibt, zwei Vorrichtungen (54, 54'). Eine der beiden Vorrichtungen (54) ist zur Erleichterung eines Ascheabzuges über einen nach einer Richtung hin geneigten Feuerraumboden (52) zur primären Luftversorgung der Wirbelschichtfeuerung in einer zum Feuerraumboden (52) parallelen Ebene angeordnet. Diese Vorrichtung (54) besteht aus drei in dieser Ebene angeordneten, horizontal geführten Verteilerrohren (55) mit daran angeschlossenen Düsenrohren (56). Die Achsen der Verteilerrohre (55) sind in Fig. 8 senkrecht auf die Darstellungsebene gerichtet. An den Verteilerrohren (55) sind Düsenrohre (56) angeschlossen, die parallel zur Neigung des Feuerraumbodens (52) ausgerichtet sind. Gleichzeitig aber befinden sich die Düsenrohre (56) auch lagemäßig jeweils innerhalb eines geraden Kegels (K), dessen Kegelachse (A) rechtwinklig auf das Verteilerrohr (56) gerichtet ist und in einer horizontalen Ebene liegt. In diesem Falle liegen die Düsenrohre (56) nicht in der von der Kegelachse (A) getragenen horizontalen Ebene. Die Düsenrohre (56) sind in vorgegebenen Abständen an den Verteilerrohren (55) angeordnet und liegen einander gegenüber. Dabei kann auch die Möglichkeit auftreten, daß aufgrund räumlicher Gegebenheiten die Düsenrohre (56) an einem in der Nähe einer Feuer-

raumwand (52' oder 52") befindlichen Verteilerrohr (55) nicht gegenüberliegend, d.h. nur noch in einer Reihe angeordnet sind. Die Vorrichtung (54) ist über ein jeweils an einem Verteilerrohr (55) angeschlossenen vertikalen Zuführrohr (58) mit einer unter dem Feuerraumboden (52) befindlichen Luftversorgung (60) verbunden, wobei die Verteilerrohre (55) gleichzeitig eine Versteifungsfunktion für den Feuerraumboden (52) bzw. der den Wirbelschichtraum (51) begrenzenden Wände (52', 52") erfüllen.

Die andere der beiden Vorrichtungen (54') zum Einbringen von Verbrennungsluft in den Wirbelschichtraum (51) befindet sich in einer Ebene zu Beginn der sprunghaften Querschnittserweiterung. Sie ist mit ihren Verteilerrohren (55') und Düsenrohren (56') analog zu jener in Fig. 4 dargestellten Ausführungsform ausgebildet, wobei in der genannten Ebene, die horizontal ist, zwei parallele Verteilerrohre (55') mit einander gegenüberliegenden Düsenrohren (56') zu einem Rohrsystem zusammengeschlossen und über mindestens ein Zuführrohr (58') - in nicht dargestellter Weise - mit einer Luftversorgung zum Einbringen von Sekundärluft oder einem anderen sauerstoffhaltigen Gas in den Wirbelschichtraum (51) verbunden sind.

Auch bei dieser Vorrichtung (54') orientiert sich die Lage der Düsenrohre (56') an einem gedachten geraden Kegel (K), wobei die Düsenrohre (56') jeweils in der Kegelachse (A) liegen.

Neben dem Lufttransport hat dieses Rohrsystem (54'), wie die Vorrichtung (54) zum primären Lufteintrag, gleichzeitig auch eine Funktion einer Versteifung mindestens einer den Wirbelschichtraum begrenzenden Wand zu erfüllen.

An den Verteilerrohren (55, 55') und an den Düsenrohren (56, 56') befinden sich jeweils in mindestens einer Reihe in vorgegebenen Abständen Austrittsöffnungen (59, 59'), über die in den Wirbelschichtraum in gezielter Verteilung das sauerstoffhaltige Gas eingetragen wird. Wie bei den zuvor ausgeführten Vorrichtungen sind die Düsenrohre (56, 56') an den Verteilerrohren (55, 55') lösbar befestigt und haben an ihrem freien Ende entfernbare Verschlußkappen (57, 57').

Entsprechend den jeweiligen Bedingungen in einem Wirbelschichtraum sind die Rohre der in den Fig. 1, 4 bis 8 dargestellten Vorrichtungen, d. h. die Verteiler-und die Düsenrohre entsprechend geschützt. Nach Fig. 9 ist ein zu Fig. 2 analog dargestelltes Rohr (5 oder 6) aus einem metallischen Werkstoff beispielsweise über eine Rohrbestiftung (61) mit einem Material (62) ummantelt. Das Material (62) kann dabei ein feuerfester, meist keramischer Stoff und/oder ein abriebfester Stoff und/oder ein Katalysator sein, z.B. für eine Rauchgasentstickung, für eine Rauchgasentschwefelung, für eine Nachverbrennung oder für einen chemischen Prozeß in der Wirbelschicht.

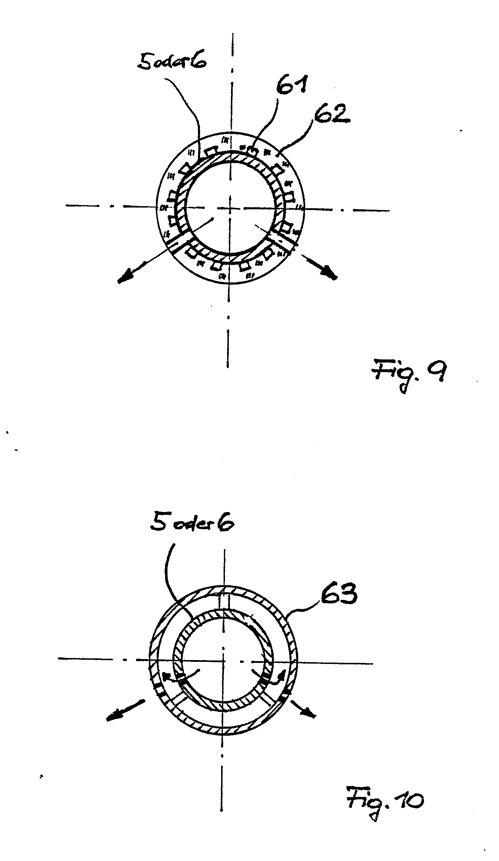

Gemäß Fig. 10 ist auch eine Möglichkeit gezeigt, das Rohr (5 oder 6) in Verbindung mit einem äußeren Rohr (63) mit einer Mantelkühlung zu versehen, wobei in dem dargestellten Fall als Kühlmedium ein einzubringendes gasförmiges Medium oder Luft vorgesehen ist. Bei einer entsprechend anderen Konstruktionslösung könnte zur Rohrmantelkühlung ein flüssiges Kühlmedium, beispielsweise jenes des Wirbelschichtraum-Kühlkreislaufs, eingesetzt werden, wobei als Austrittsöffnung ein durch beide Rohrwände (5; 63) gehendes Austrittsrohr vorzusehen ist.

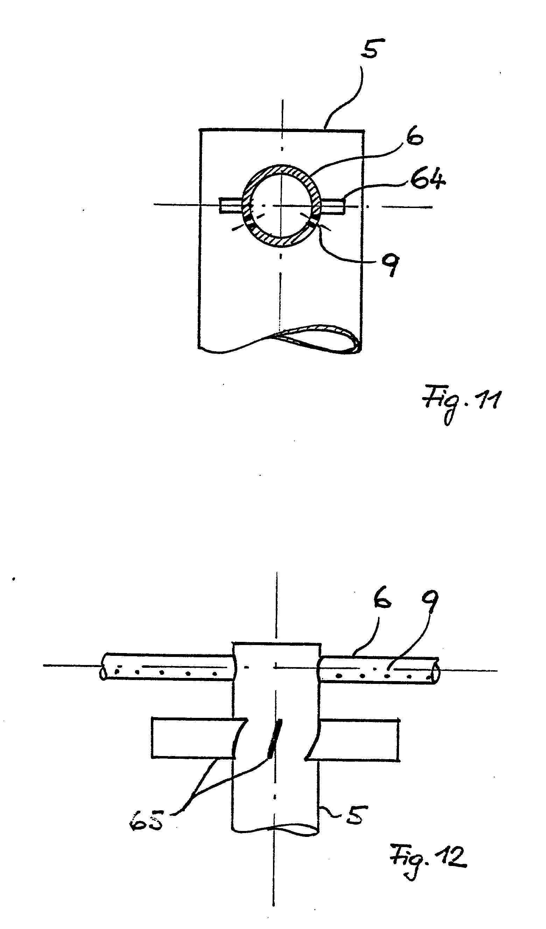

Fig. 11 und 12 zeigen jeweils eine Möglichkeit in der Anordnung und Wahl von Elementen, die die Gasströmung für ein rasches Vermischen eines gasförmigen Mediums mit einem aus der Wirbelschicht kommenden Gasstrom beeinflussen. So befinden sich gemäß Fig. 11 beispielhaft am einen Düsenrohr (6) von rundem Strömungsquerschnitt an seinem äußeren Rohrumfang Bolzen oder Stifte (64), gemäß Fig. 12 an einem vertikalen Verteilerrohr (5) schräg angeschweißte Blechelemente (65), die in deren Gestalt und Anbringung die unterschiedlichsten Formen annehmen können.

### Ansprüche

1. Vorrichtung zum Einbringen eines gasförmigen Mediums, insbesondere Luft in einer Ebene eines Wirbelschichtraumes, insbesondere eines Wirbelschichtfeuerraumes, mit mindestens einem Verteilerrohr und mit Düsenrohren, die in einem Winkel, insbesondere in einem Rechten Winkel an das Verteilerrohr angeschlossen sind und Austrittsöffnungen in der Düsenrohrwand aufweisen, **dadurch gekennzeichnet,** daß die Düsenrohre (6; 16; 26; 36; 46; 56; 56') an dem Verteilerrohr (5; 25; 25; 35; 45; 55; 55') jeweils eine Lage einnehmen, die innerhalb eines geraden Kegels (K) oder auf dem Kegel (K) liegt, dessen Kegelachse (A) rechtwinklig auf das Verteilerrohr gerichtet ist und in einer horizontalen Ebene liegt.

2. Vorrichtung nach Anspruch 1, **dadurch gekennzeichnet,** daß die Düsenrohre (6; 16; 26; 36; 46; 56; 56') einander gegenüberliegend angeordnet sind.

3. Vorrichtung nach Anspruch 1 oder 2, **dadurch gekennzeichnet,** daß an einem horizontal geführten Verteilerrohr (5; 15; 35; 55; 55') mehrere Düsenrohre (6; 16; 36; 56; 56') in vorgegebenen Abständen angeschlossen sind.

4. Vorrichtung nach Anspruch 1 oder 2, **dadurch gekennzeichnet**, daß bei einer Vielzahl von vertikal geführten Verteilerrohren (5; 25; 45) mindestens zwei Düsenrohre (6; 26; 46) in vorgegebener Verteilung vorgesehen sind.

5. Vorrichtung nach einem der Ansprüche 1 bis 4, **dadurch gekennzeichnet**, daß die Düsenrohre (6; 16; 26; 36; 46; 56; 56') in ihrer Rohrwand in vorgegebenen Abständen und in mindestens einer Reihe Austrittsöffnungen (9; 19; 29; 39; 49; 59; 59') aufweisen.

6. Vorrichtung nach einem der Ansprüche 1 bis 5, **dadurch gekennzeichnet**, daß das Verteilerrohr (5; 15; 35; 55; 55') in seiner Rohrwand in vorgegebenen Abständen und in mindestens einer Reihre Austrittsöffnungen aufweist.

7. Vorrichtung nach einem der Ansprüche 1 bis 6, **dadurch gekennzeichnet**, daß die in der jeweiligen Rohrwand befindlichen Austrittsöffnungen in Abhängigkeit von dem Verhältnis aus der Rohrwandstärke und dem Durchmesser der Austrittsöffnung jeweils in einer von der Austrittsöffnung bestimmten Rohrquerschnittsebene in einem Winkelbereich von 0-180° unterhalb einer horizontalen, in der Rohrquerschnittsebene und in deren Mittelpunkt liegenden Geraden gerichtet sind.

8. Vorrichtung nach einem der Ansprüche 1 bis 7, **dadurch gekennzeichnet**, daß an dem freien Ende eines Verteilerrohres und/oder eines Düsenrohres jeweils in einer Rohrabschlußwand mindestens eine Austrittsöffnung vorgesehen ist.

9. Vorrichtung nach einem der Ansprüche 1 bis 8, **dadurch gekennzeichnet**, daß an dem freien Ende eines jeden Düsenrohres (6; 16; 26; 36; 46; 56; 56') und/oder eines jeden Verteilerrohres (5; 25; 45; 55) ein entfernbarer Kappenverschluß (7; 17; 27; 37; 47; 57; 57') vorgesehen ist.

10. Vorrichtung nach einem der Ansprüche 1 bis 9, **dadurch gekennzeichnet**, daß die Düsenrohre (6; 16; 26; 36; 46; 56; 56') an dem Verteilerrohr (5; 15; 25; 35; 45; 55; 55') lösbar befestigt sind.

11. Vorrichtung nach einem der Ansprüche 1 bis 10, **dadurch gekennzeichnet**, daß die Düsenrohre (36; 46; 56; 56') in mindestens einem vorgegebenen Abstand über einem Düsenboden (32; 42; 52) einer primären Gasversorgung angeordnet sind.

12. Vorrichtung nach Anspruch 11, **dadurch gekennzeichnet**, daß die Düsenrohre (56') in einer Ebene zu Beginn einer sprunghaften Querschnittserweiterung des Wirbelschichtraumes (51) angeordnet sind.

13. Vorrichtung nach einem der Ansprüche 1, 2, 4 bis 12, **dadurch gekennzeichnet**, daß mindestens ein vertikales Verteilerrohr (25; 45) mit einer unter dem Feuerraumboden (22; 42) befindlichen Gasversorgung verbunden ist.

14. Vorrichtung nach einem der Ansprüche 1 bis 13, **dadurch gekennzeichnet**, daß das Verteilerrohr und die Düsenrohre mit hitze-und/oder abriebfestem Material ummantelt sind.

15. Vorrichtung nach einem der Ansprüche 1 bis 14, **dadurch gekennzeichnet**, daß das Verteilerrohr und die Düsenrohre mit einem Katalysator-Ummantelung versehen sind.

16. Vorrichtung nach einem der Ansprüche 1 bis 15, **dadurch gekennzeichnet**, daß das Verteilerrohr und die Düsenrohre mit einer Rohrkühleinrichtung versehen sind.

17. Vorrichtung nach einem der Ansprüche 1 bis 16, **dadurch gekennzeichnet**, daß das Verteilerrohr (5) und/oder die Düsenrohre (6) mit Elementen (64; 65) zur Beeinflussung der Gasströmung versehen sind.

18. Vorrichtung nach einem der Ansprüche 1 bis 17, **dadurch gekennzeichnet**, daß das Verteilerrohr (15; 35; 55; 55') gleichzeitig ein Versteifungselement mindestens einer den Wirbelschichtraum begrenzenden Wand (12; 32'; 52; 52'; 52") ist.

19. Vorrichtung nach einem der Ansprüche 1 bis 18, **dadurch gekennzeichnet**, daß der Winkel an der Kegelspitze ein Rechter Winkel ist.

20. Vorrichtung nach einem der Ansprüche 1 bis 19, **dadurch gekennzeichnet**, daß die Düsenrohre jeweils in der Kegelachse (A) liegen.

Fig. 1

Fig. 2

Fig. 3

Fig. 4

Fig. 5

0 280 016

Fig. 6

Fig. 7

Fig. 8

5 oder 6
61
62

Fig. 9

5 oder 6
63

Fig. 10

Fig. 11

Fig. 12